# EUROPEAN PATENT APPLICATION

(11) **EP 4 564 708 A1**
(43) Date of publication of application: **04.06.2025**
(21) Application number: 23212876.9
(22) Date of filing: 29.11.2023
(51) Int. Cl.: H04B 10/70

(54) **OPTICAL TERMINAL AND METHOD FOR QUANTUM COMMUNICATION**

(71) Applicant: Airbus S.A.S., 31700 Blagnac (FR)
(72) Inventor: Alberto Comin, 82024 Taufkirchen (DE)
(74) Representative: OTN Airbus SAS

(57) **Abstract**

The present invention provides an optical terminal (1) for quantum communication, comprising a first terminal unit (2a) configured to receive and/or transmit a first signal beam (3a) from or to a first target terminal (4a) and having a first optical axis (21a), a second terminal unit (2b) configured to receive and/or transmit a second signal beam (3b) from and/or to a second target terminal (4b) and having a second optical axis (21b), and a connecting part (5) configured to communicate with the first terminal unit (2a) and the second terminal unit (2b), wherein each of the first and second terminal units (2a, 2b) comprises: a telescope (22) provided on the respective first and second optical axis (21a, 21b) to collimate the respective first and second signal beams (3a, 3b), a beam corrector (23) placed on the respective first and second optical axis (21a, 21b) and configured to correct the respective first and second optical signals beam (3a, 3b) over a predetermined field of view of the telescope (22), a steering system (24) configured to adjust a propagation direction of the first and second signal beams (3a, 3b) to the respective first and second optical axis (21a, 21b), and a coupling portion (25) for coupling the respective first and second signal beams (3a, 3b) to the connecting part (5). Further, the present invention provides a corresponding method for quantum communication.

## Description

### TECHNICAL FIELD OF THE INVENTION

The invention relates to a Free-space optical terminal as well as to a method for quantum communication.

### TECHNICAL BACKGROUND

Airborne relay distribution systems for drones have been proposed in the past to connect a network of drones by optical links. Typically, the distance between the drones is roughly similar to or less than the Rayleigh range of the Gaussian optical beam, so that the signal beams do not diverge much. Such systems typically require two telescopes each equipped with very precise coarse and fine steering or pointing assemblies to achieve adequate performance.

In order to mitigate the weight of such systems, Liu et al. "Optical-Relayed Entanglement Distribution Using Drones as Mobile Nodes", Phys. Rev. Lett. 126, 020503, 2021 proposed a system using telescopes with apertures of 26 mm. Link distance were approximately 400 m.

In this invention, the present invention is directed to improve the efficiency and simplicity of an implemented airborne optical relay.

### SUMMARY OF THE INVENTION

According to the invention, this problem is solved in each case by the subject matters of the independent claims.

According to a first aspect of the invention, an optical terminal for quantum communication is provided. The optical terminal comprises a first terminal unit configured to receive and/or transmit a first signal beam from or to a first target terminal and having a first optical axis, a second terminal unit configured to receive and/or transmit a second signal beam from and/or to a second target terminal and having a second optical axis, and a connecting part configured to communicate with the first terminal unit and the second terminal unit. Each of the first and second terminal units comprises a telescope provided on the respective first and second optical axis to collimate the respective first and second signal beams, a beam corrector placed on the optical axis and configured to correct the respective first and second optical signals beam over a predetermined field of view of the telescope, a steering system and configured to adjust a propagation direction of the respective first and second signal beams to the optical axis of the respective first and second optical axis, and a coupling portion for coupling the respective first and second signal beams to the connecting part.

According to a second aspect of the invention, a method for quantum communication is provided. The method for quantum communication comprises the steps of: Directing a first optical terminal unit of a optical terminal towards an optical target terminal, wherein the optical terminal unit has an optical axis; receiving an signal beam from or to the optical target terminal through a telescope of the optical terminal unit; correcting the received signal beam by a beam corrector, wherein the beam corrector is configured to correct the signal beam over a predetermined field of view of the telescope, coupling the corrected signal beam into a connecting part configured to communicate with a second terminal unit of the optical terminal.

A fundamental concept of the invention is to provide a way to relay an optical beam using two wide field-of-view telescopes, which do not require to be pointed very precisely. The present invention thus provides a system, which only requires relatively simple coarse steering systems. The proposed optical terminal of the present invention is based on active compensation of optical aberrations by means of tunable phase plates. In this way, the above optical terminal can be used for relaying extended free space QKD links and for distributing pairs of entangled photons. The optical terminal for quantum communication thus is particularly suitable for being deployed on an airborne platform.

Typically, the first optical signal beam and the second optical signal beam comprises a QKD signal and an overlayed beacon signal that have been transmitted from the same station. The beam corrector is configured to correct the signal beam in order to provide a stable and approximately diffraction-limited beam profile. Since the incoming or outgoing direction from or to the target station may deviate from the optical axis, optical distortions may occur that need to be corrected in order to achieve a diffraction-limited optical beam. Correcting a beam is to be understood in that the beam is corrected such that an approximately diffraction-limited beam is output from the telescope or the beam corrector, whatever component is placed downstream in the system. The correction can thus include compensation of optical aberrations by phase and/or amplitude compensation over the wavefront of the optical beam.

A particular advantage in the solution according to an aspect of the invention is that the telescopes of the optical terminal do not need to be steered with very accurate coarse steering or pointing assemblies. The reason is that using a beam corrector (or commentator) in the form of e.g. a plate, the telescope can maintain diffraction-limited performance across a wide field of view, so even if the coarse steering or pointing system is not able to point the beam straight in the telescope, the coupling efficiency remains very high.

Advantageous embodiments and further developments emerge from the description with reference to the figures.

According to some aspects according to the invention, the coupling portion comprises a fiber coupling unit configured to couple the respective first and second signal beams into an optical fiber of the connecting part. Due to the high beam quality of the signal beams, a high coupling efficiency can be achieved. By coupling into a fiber, the signal beams can be easily distributed and relayed to the other optical terminal unit. Therefore, the weight of the system is reduced and a flexibility of the delivery of the signal beams is increased.

According to some aspects according to the invention, the optical fiber is an optical relay fiber connected to the coupling portions of the first terminal unit and the second terminal unit and configured to optically connect the first terminal unit and the second terminal unit to each other. This enables an efficient relay terminal for connecting two optical target terminals, that are positioned out of sight of each other.

According to some aspects according to the invention, the first optical signal and/or the second optical signal comprises a QKD signal of a first wavelength and a beacon signal of a second wavelength different from the first wavelength. In this configuration, the beacon signal can be analyzed for its direction of propagation and its deviation of the optical axis of the respective optical terminal unit. A deflector then can be adjusted to direct the QKD signal into the optical fiber. In this way, an efficient fiber coupling of the QKD signal can be achieved. The adjustment may also compensate for an error due to chromatic aberration of the telescopes or other optics used in the optical terminal unit.

According to some aspects according to the invention, the connecting part comprises an entangled photon source configured to emit a pair of entangled photons, wherein the entangled photon source is arranged to couple a first photon of the pair of entangled photons to the coupling portion of the first terminal unit and a second photon of the pair of entangled photons to the coupling portion of the second terminal unit. In this way, the optical terminal can distribute a pair of entangled photons to two different target terminals in an efficient way.

According to some aspects according to the invention, the connecting part comprises an optical fiber coupling setup configured to guide the first photon of the pair of entangled photons from the entangled photon source to the coupling portion of the first optical terminal unit by a first optical fiber and the second photon of the pair of entangled photons from the entangled photon source to the coupling portion of the second optical terminal unit by a second optical fiber. By coupling the entangled photons into an optical fiber, weight of the system is reduced and a flexibility of the delivery of the entangled photon is increased. Furthermore, it enables to apply fiber optical components for beam manipulation.

According to some aspects according to the invention, the optical fiber is a single mode fiber. Such a single-mode fiber is particularly suitable due to its ability to provide a stable, low-loss optical signal without spatial mode conversion and small dispersion.

According to some aspects according to the invention, the beam corrector comprises a liquid crystal modulator, a deformable mirror or a set of interchangeable phase plates. A liquid crystal modulator and a deformable mirror can be tuned to the particular optical system by means of electronics. For this purpose the correction to be applied can be pre-calculated and stored in a memory. Similarly, the set of interchangeable phase plates can be calculated in advance and manufactured or assembled in a customized way. The calculation can be done using an optical design software (e.g. Zemax Optic Studio) and then verified in the laboratory.

According to some aspects according to the invention, the beam corrector is configured as a stacked amplitude-phase corrector plate. These can also be implemented as stacked liquid crystal modulators In this case, the optical setup may comprise polarized beam splitters, two beam correctors for each polarization component and a second polarized beam splitter for recombining the two orthogonal polarized beams. In this way, phase and amplitude modulation is efficiently realized, allowing a more precise beam correction.

According to some aspects according to the invention, the beam corrector is placed downstream the telescope with respect to an incoming first or second signal beam from the first or second target terminal. In this case, the beam corrector is placed between the telescope and the coupling portion. In this way, the aperture of the corrector plate is minimized, since the telescope has already collimated a received signal beam.

According to some aspects according to the invention, the beam corrector is placed inside the telescope. In this way, a certain aperture is required that increses the resolution of the beam correciton and compensation by the beam corrector. Furthermore, inside the telescope, the exhibition to environmental influences of the beam corrector can be prevented easily.

According to some aspects according to the invention, the steering system comprises a coarse steering system and a fine steering system, wherein the fine steering system is configured as a Risley Prism. The Risley Prisms is a particularly simple beam pointing system that can be implemented by using only flat or meta-optics.

According to some aspects according to the invention, the coupling portion comprises a position sensitive detector arranged and configured to detect a deviation of a propagation axis of the respective first and second optical signals from the respective first and second optical axis, wherein the steering system further comprises a controller configured to control a deflector according to a sensed position on the position sensitive detector. In this way, an adjustment of the propagation axes or propagation direction of the signal beams and the optical axes in the respective optical terminal unit can be achieved efficiently. This is beneficial for fiber coupling or for guiding an entangled photon towards a target terminal. The position sensitive detector in particular is configured as a camera. In this way, the camera acts as a wide-field sensor thus allowing to steer a coarse pointing or steering system. The camera also acts as a narrow-field sensor so that it can guide the deflector of the coupling portion.

According to some aspects according to the invention, the telescope only comprises spherical optical elements. Surfaces of optical elements of the telescope, and of other optical elements used in the optical terminal units, are thus either flat or spherical. Also, meta-surfaces may be employed. However, in these aspects, no aspherical optics are employed due to their increased complexity and costs.

According to some aspects according to the invention, the connecting part comprises a free space optical steering device configured to guide the first signal beam onto the second optical axis and/or the second signal beam onto the first optical axis. In this way, the first and second signal beams can be relayed to the other optial terminal unit without the use of optical fiber coupling. The complexity of the system is thus reduced.

According to some aspects according to the invention, the method further comprises detecting a deviation angle of the corrected signal beam to the optical axis, and adjusting the propagation direction of the signal beam to the optical axis by a deflector.

The above embodiments and further developments can be combined with each other as desired, if useful. In particular, all features of the optical terminal for quantum communication are transferable to the method for quantum communication, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

### BRIEF SUMMARY OF THE DRAWINGS

The present invention is explained more specifically below on the basis of the exemplary embodiments indicated in the schematic figures, in which:
- Fig. 1: shows a schematic illustration of an optical terminal for quantum communication according to an embodiment of the invention;
- Fig. 2: shows a schematic illustration of an optical terminal for quantum communication according to a further embodiment of the invention;
- Fig. 3: shows a schematic illustration of an optical terminal for quantum communication according to a further embodiment of the invention;
- Fig. 4: shows a schematic illustration of an optical terminal for quantum communication according to a further embodiment of the invention;
- Fig. 5: shows a schematic illustration of an optical terminal for quantum communication according to a further embodiment of the invention;
- Fig. 6: shows a schematic illustration of an optical terminal for quantum communication according to a further embodiment of the invention;
- Fig. 7: shows a schematic illustration of an optical terminal for quantum communication according to a further embodiment of the invention;
- Fig. 8a-b: show a schematic illustration of optical terminals for quantum communication according to further embodiments of the invention;
- Fig. 9: shows a flow chart for a method for quantum communication according to an embodiment of the invention.

In the figures of the drawing, elements, features and components which are identical, functionally identical and of identical action are denoted in each case by the same reference designations unless stated otherwise.

### DESCRIPTION OF EXEMPLARY EMBODIMENTS

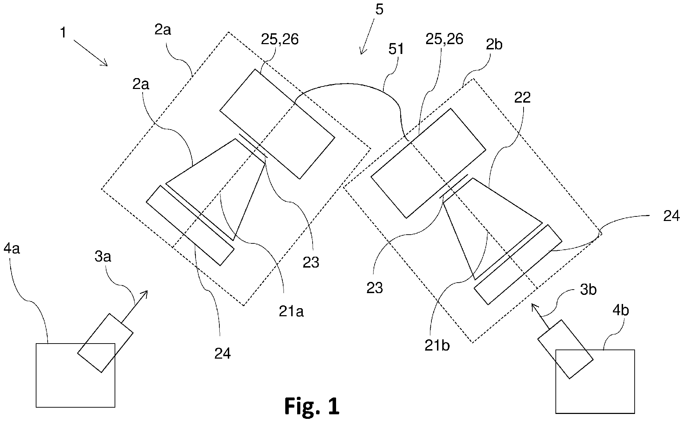

Fig. 1 shows a schematic illustration of an optical terminal 1 for quantum communication according to an embodiment of the invention.

The optical terminal 1 for quantum communication comprises a first terminal unit 2a configured to receive a first signal beam 3a from a first target terminal 4a. Alternatively or in addition, the first terminal unit 2a is configured to transmit the first signal beam 3a to the first target terminal, depending on the application. The optical terminal 1 preferably is placed on a moving object such as a drone, an aircraft, a satellite or the like. The target terminal 4a may be a ground station or another optical terminal 1 and preferably is also configured to receive and detect or transmit the first signal beam 3a.

The first terminal unit 2a has a first optical axis 21a, on which the received or transmitted first signal beam 3a propagates in the case, pointing of the first terminal unit 2a to the first target terminal 4a is without deviation. The optical terminal 1 in Fig. 1 also comprises a second terminal unit 2b, which is configured to receive a second signal beam 3b from a second target terminal 4b, or, depending on the application, may be configured to transmit a second signal beam 3b to a second target terminal 4b. The second optical terminal 2b has a second optical axis 21b, on which the received or transmitted second signal beam 3a propagates in the case, pointing of the second terminal unit 2a to the second target terminal 4a is without deviation.

The optical terminal 1 further comprises a connecting part 5. In the embodiment shown in Fig. 1, the connecting part 5 is arranged between the first terminal unit 2a and the second terminal unit 2b. The connecting part 5 is configured to communicate with the first terminal unit 2a and the second terminal unit 2b. In the embodiment shown in Fig. 1, the connecting part 5 comprises an optical fiber 51, which connects the first terminal unit 2a and the second terminal unit 2b to each other, as will be described further below.

Each of the first and second terminal units 2a, 2b comprises a steering system 24. The steering system 24 is configured to adjust a propagation direction of the first and second signal beams 3a, 3b to the respective first and second optical axis 21a, 21b. The steering system 24 is thus able to track the respective target terminal 4a, 4b. The steering system typically has a steerable deflector, which is able to reflect and/or refract first or second signal beam 3a, 3b to the respective target terminal 4a, 4b or to the respective optical axis 21a, 21b.

Each of the first and second terminal units 2a, 2b comprises a telescope 22 provided on the respective first and second optical axis 21a, 21b. The telescope 22 is configured to collimate the respective first and second signal beams 3a, 3b. Typically, and shown in Fig. 1, the telescope is configured to demagnify the first and second signal beams 3a, 3b when received by the optical terminal units 2a, 2b. In the embodiment in Fig. 1, the telescope 22 is arranged downstream the steering system 24 with respect to a received or incoming signal beam 3a, 3b.

Each of the first and second terminal units 2a, 2b comprises a beam corrector 23 placed on the respective first and second optical axis 21a, 21b. The beam corrector is configured to correct the respective first and second optical signals beam 3a, 3b over a predetermined field of view of the telescope 22. For a received signal beam 3a, 3b, the incoming direction from the target may deviate from the optical axis 21a, 21b, so that optical distortions may occur that need to be corrected in order to achieve a diffraction-limited optical beam. Correcting a beam received by the terminal units is thus to be understood in this case that the beam is corrected such that an approximately diffraction-limited beam is exiting the beam corrector 23. The correction performed by the beam corrector 23 can thus include compensation of optical aberrations by phase and/or amplitude compensation over the wavefront of the optical beam. In some embodiments, the beam corrector 23 comprises a liquid crystal modulator and a deformable mirror that can be tuned by electronic or electromechanical means. For this purpose, the correction to be applied can be pre-calculated and stored in a memory. Similarly, the set of interchangeable phase plates can be calculated in advance and manufactured or assembled in a customized way. The calculation can be done using optical design software e.g. Zemax Optic Studio and then verified in the laboratory.

In further embodiments, the beam corrector 23 comprises a set of interchangeable phase plates that are customized to the used optical setup. Such phase plates can be pre-calculated by optical design software, as described above.

In the embodiment shown in Fig. 1, the beam corrector 23 is placed downstream the telescope 22 with respect to an incoming first or second signal beam 3a, 3b from the first or second target terminal 4a, 4b.

Each of the first and second terminal units 2a, 2b comprises a coupling portion 25 for coupling the respective first and second signal beams 3a, 3b to the connecting part 5. In the embodiment shown in Fig. 1, the coupling portion 25 comprises a fiber coupling unit 26 configured to couple the respective first and second signal beams 3a, 3b into the optical fiber 51 of the connecting part 5. The optical fiber 51 is an optical relay fiber 51 connected to the coupling portions 25 of the first terminal unit 2a and the second terminal unit 2b and configured to optically connect the first terminal unit 2a and the second terminal unit 2b to each other. In preferred embodiments, the optical fiber 51, 55a, 55b is a single mode-fiber.

In this embodiment, the telescope 22 is placed between the beam steering system 24 and the beam corrector plate 23, and the beam corrector 23 is placed between the telescope 22 and the coupling unit 25 in both terminal units 2a, 2b.

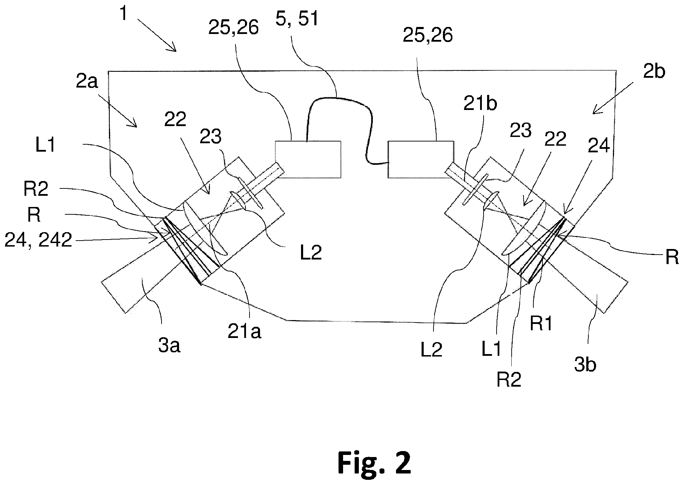

Fig. 2 shows a schematic illustration of an optical terminal 1 for quantum communication according to a further embodiment of the invention.

The embodiment of the optical terminal 1 shown in Fig. 2 is based on the embodiment of Fig. 1.

In the optical terminal 1 in Fig. 2, the steering system 24 is configured as a fine steering system 242 by being configured as a Risley Prism R. The Risley Prism R comprises two prisms R1, R2 or wedges that can rotate about the central same axis , which is typically the respective optical axis 21a, 21b. In the Risley Prism R, a beam to be deflected propagates through the transparent medium, e.g. glass, of the prism by getting refracted. The deflection angle is determined by the mutual orientation of the two prisms R1, R2.

In the embodiment shown in Fig.2, the telescope 22 comprises two plano-convex lenses L1, L2 of different focal lenghts arranged and placed apart appropriately in order to collimate the incoming or outgoing signal beams 3a, 3b. In further embodiments, other types of telescopes 22 are applied instead. In preferred embodiments, the telescope 22 only comprises spherical optical elements to relieve complexity.

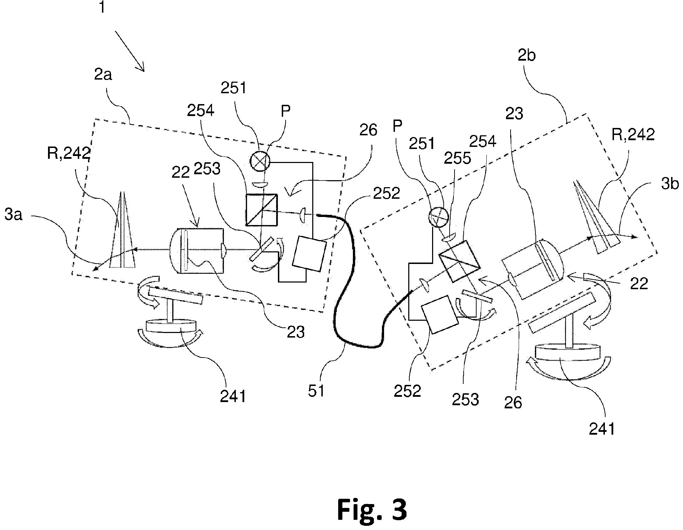

Fig. 3 shows a schematic illustration of an optical terminal 1 for quantum communication according to a further embodiment of the invention.

The embodiment of the optical terminal 1 shown in Fig. 3 is based on the embodiments of Fig. 1 and 2.

For each terminal unit 2a, 2b, the steering system 24 comprises a coarse steering system 241 and a fine steering system 242. The fine steering system 242 is configured as a Risley Prism R, as described above with reference to Fig. 2. The coarse steering system 241 is configured to direct the first and second terminal unit 2a, 2b over a wide field of view, e.g. 70° or more. This is typically achieved by electromeachnical stages or the like. The fine steering system 242 is configured to steer the beam over a rather small angle, such as e.g. 5 degrees, preferably 3 degrees, more preferably 1 to 2 degrees, however, with a higher resolution and precision than the coarse steering system 241.

In this embodiment, the beam corrector 23 is placed inside the telescope 22. The signal beams 3a, 3b thus have a larger diameter compared to positions downstream the telescope 22 towards the coupling unit 25.

In this embodiment, the first optical signal 3a and/or the second optical signal 3b comprises a QKD signal of a first wavelength and a beacon signal of a second wavelength different from the first wavelength. The coupling portion 25 comprises a dichroic beam splitter 254 that is configured to separate the first and second wavelengths. In the present embodiment, the beacon signal is transmitted and the QKD signal is reflected by the dichroic beam splitter 254.

The coupling portion 25 comprises a position sensitive detector 251 arranged and configured to detect a deviation of the respective first and second optical signals 3a, 3b from the respective first and second optical axis 21a, 21b. In this embodiment, a focussing lens 255 focuses the beacon signal onto the position sensitive detector 251. The coupling system 25 further comprises a controller 252, which is configured to control a deflector 253 according to a sensed position P on the position sensitive detector 251. In this embodiment, the deflector 253 is configured as a rotatable reflecting mirror and positioned on the optical axis 21a, 21b to deflect the incoming or outgoing signal beams 3a, 3b. In this embodiment, the position sensitive detector 251 is configured as a quadrat photodiode.

Although only outgoing signal beams 3a, 3b are shown in Fig. 3, it is understood that the optical terminal 1 in this embodiment receives the signal beams 3a, 3b from respective target terminals 4a, 4b and relays the first and second signal beams 3a, 3b to the respective first and second target terminal 4a, 4b both not shown in Fig. 3 by guiding the received signal beams 3a, 3b through the terminal units 2a, 2b and the optical fiber 51, so that the signal beams 3a, 3b received by one of the terminal units 2a, 2b become a signal beam 3a, 3b to be transmitted by the other terminal unit 2a, 2b.

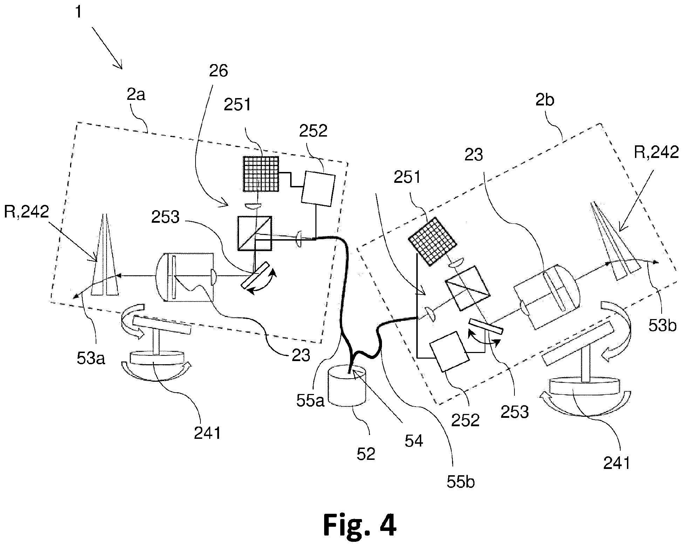

Fig. 4 shows a schematic illustration of an optical terminal for quantum communication according to a further embodiment of the invention.

The embodiment of the optical terminal 1 shown in Fig. 4 is based on the embodiments of Fig. 1 to 3.

In this embodiment of the optical terminal 1, the connecting part 5 comprises an entangled photon source 52 configured to emit a pair of entangled photons 53a, 53b, wherein the entangled photon source 52 is arranged to couple a first photon 53a of the pair of entangled photons 53a, 53b to the coupling portion 25 of the first terminal unit 2a and a second photon 53b of the pair of entangled photons 53a, 53b to the coupling portion 25 of the second terminal unit 2b.

The connecting part 5 comprises an optical fiber coupling setup 54 configured to guide the first photon of the pair of entangled photons 53a, 53b from the entangled photon source 52 to the coupling portion 25 of the first optical terminal unit 2a by a first optical fiber 55a and the second photon 53b of the pair of entangled photons 53a, 53b from the entangled photon source 52 to the coupling portion 25 of the second optical terminal unit 2b by a second optical fiber 55b. In a preferred embodiment, the the first and second optical fibers 55a, 55b are single mode fibers.

Furthermore, in this embodiment, the position sensitive detector 251 is configured as a camera. The camera acts as a wide-field sensor thus allowing to steer the coarse steering system 241 and the fine steering system 242. The camera also acts as a narrow-field sensor so that it can guide the deflector 253 of the coupling portion 25. The camera may be any suitable camera, e.g. based on CMOS or CCD sensors.

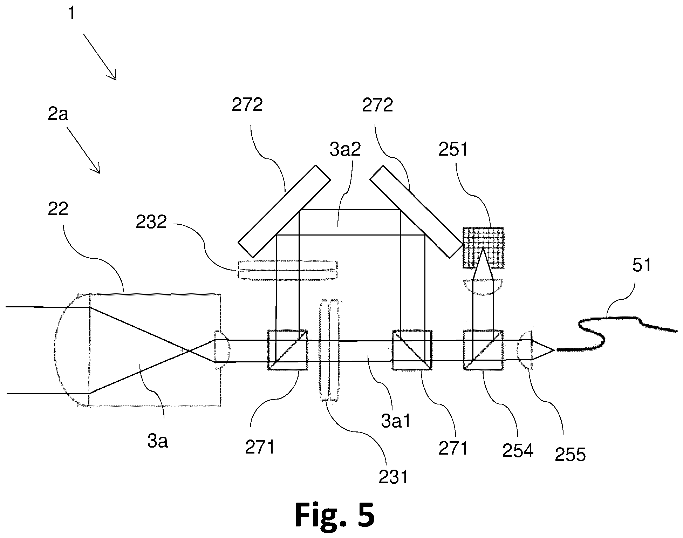

Fig. 5 shows a schematic illustration of an optical terminal 1 for quantum communication according to a further embodiment of the invention.

The embodiment of the optical terminal 1 shown in Fig. 4 is based on the embodiments of Fig. 1 to 3. However, only one terminal unit 2a is shown for simplicity.

In this embodiment, the terminal unit 2a a first polarizing beam splitter 271 is configured to split the signal beam 3a into first and second linear polarized beams 3a1, 3a2, wherein the polarization of the first linear polarized beam 3a1 is orthogonal to the second linear polarized beam 3a2. A first and second beam corrector 231, 231 then corrects the respective linear polarized beams 3a1, 3a2. In this embodiment, the first and second beam correctors 231, 232 are configured as stacked amplitude-phase corrector plates. In further embodiments, the first and second beam correctors 231, 232 may be configured as stacked liquid crystal modulators having orthogonal orientation for amplitude-phase modulation. The reflected second linear polarized beam 3a2 is reflected by two reflecting mirrors 272 and then recombined with the first linear polarized beam 3a1 by a second polarizing beam splitter 274 to achieve the corrected signal beam 3a.

In further embodiments, the beam splitters 271 and reflecting mirrors 272 as well as the second beam corrector 232 are removed to provide only one beam corrector 23 configured as an amplitude-phase mask.

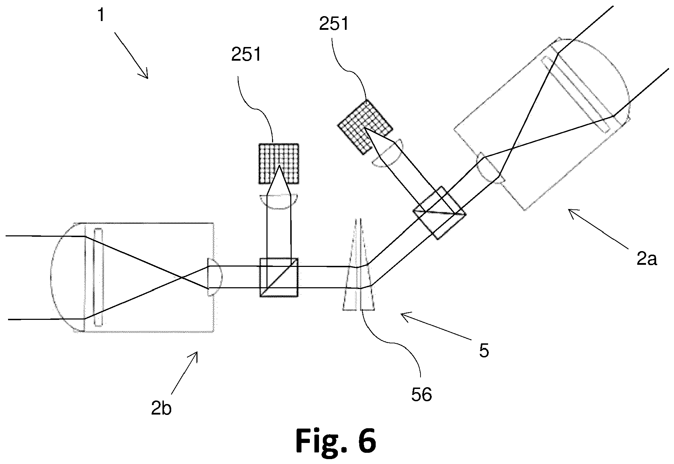

Fig. 6 shows a schematic illustration of an optical terminal for quantum communication according to a further embodiment of the invention.

The embodiment of the optical terminal 1 shown in Fig. 6 is based on the embodiments of Fig. 1 to 3 and 5.

In this embodiment, the connecting part 5 comprises a free space optical steering device 56 configured to guide the first signal beam 3a onto the second optical axis 21b and/or the second signal beam 3b onto the first optical axis 21a. The optical terminal 1 shown in Fig. 6 thus employs only free-space optics, so that fiber coupling is not needed.

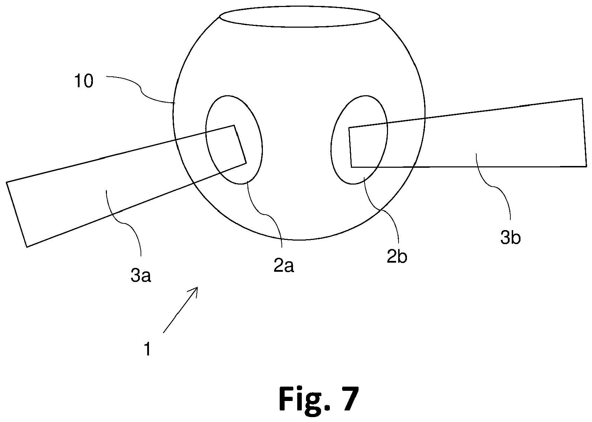

Fig. 7 shows a schematic illustration of an optical terminal for quantum communication according to a further embodiment of the invention.

The embodiment of the optical terminal 1 shown in Fig. 7 is based and compatible with any of the embodiments described above with reference to Fig. 1 to 6.

The optical terminal 1 comprises a main body or housing 10, in which the first and second terminal units 2a and 2b have been integrated. As an example, a first signal beam 3a is received by the first terminal unit 2a, relayed to the second terminal unit 2b and transmitted by the second terminal unit 2b to another target. Integrated into such a housing 10, the optical terminal 1 may be attached to a moving object such as a drone, an aircraft, a satellite or the like.

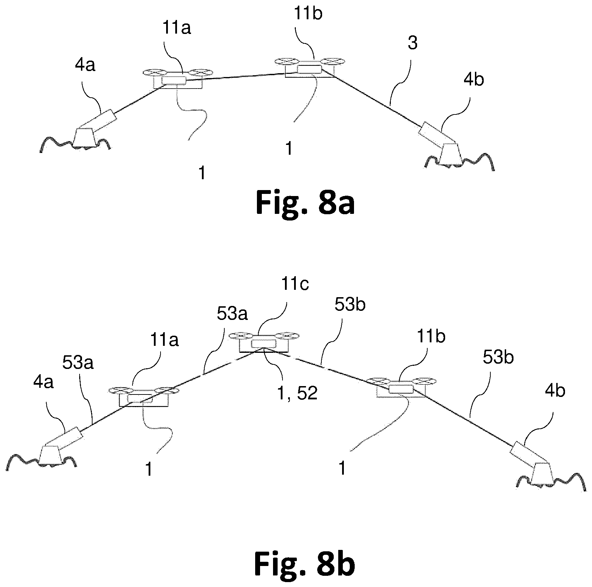

Fig. 8a-8b show a schematic illustration of optical terminals for quantum communication according to further embodiments of the invention.

The embodiment of the optical terminal 1 shown in Fig. 8 is based on and compatible with any of the embodiments described above with reference to Fig. 1 to 7.

Fig. 8a and 8b show two ground stations as target terminals 4a, 4b for the optical terminal 1, which is arranged on a flying object, such as a drone 11a, 11b. In Fig. 8a, signal beam 3 is transmitted from the first ground station 4a to a first drone 11a, where it is relayed and transmitted to a second drone 11b, from where it is relayed and transmitted to the second ground station 4b.

In Fig. 8b, an additional third drone 11c comprises an entangled photon source 52, e.g. as the one described above with respect to the embodiment shown in Fig. 4, producing a pair of entangled photons 53a, 53b. The third drone 11c then distributes a first entangled photon 53a of the pair of entangled photons 53a, 53b towards the first drone 11a and a second entangled photon 53b of the pair of entangled photons 53a, 53b towards the second drone 11b. The transmission of the pair of entangled photons 53a, 53b to the respective first and second drones 11a, 11b typically is performed simultaneously. The first and second drones 11a, 11b then relay the respective first and second entangled photon 53a, 53b to the respective ground stations 4a, 4b. In further embodiments, the third drone 11b relays the signal beam 3 from the first drone 11a to the second drone 11a. In this manner, an airborne QKD network can be established.

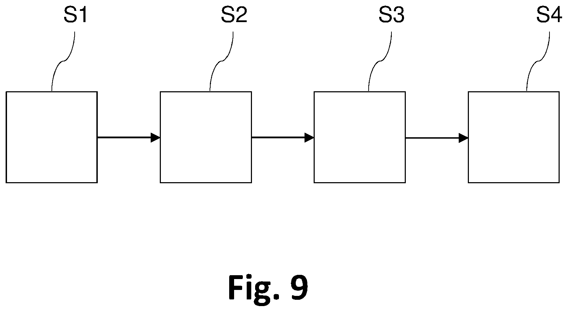

Fig. 9 shows a flow chart for a method for quantum communication according to an embodiment of the invention.

The method comprises the step of directing S1 a first optical terminal unit 2a of an optical terminal 1 towards an optical target terminal 4a, wherein the first optical terminal unit 2a has an optical axis 21a. A signal beam 3a is received S2 from or to the optical target terminal 4a through a telescope 22 of the first optical terminal unit 2a. The received signal beam 3a is corrected S3 by a beam corrector 23, wherein the beam corrector 23 is configured to correct the signal beam 3a over a predetermined field of view of the telescope. The corrected signal beam 3a is coupled S4 into a connecting part 5 configured to communicate with a second terminal unit 2b of the optical terminal 1.

In case, the coupling portion 25 comprises a fiber coupling unit 26, the method may further comprise detecting a deviation angle of the corrected signal beam 3a to the optical axis 21a, and adjusting the propagation direction of the signal beam to the optical axis 21a by a deflector 253.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps, which have been described may also be used in combination with other characteristics or steps and in any order unless the disclosure or context suggests otherwise. This disclosure hereby incorporates by reference the complete disclosure of any patent or application from which it claims benefit or priority.

### LIST OF REFERENCE SIGNS

- 1: optical terminal
- 2a, 2b: terminal units
- 3a, 3b: signal beams
- 4a, 4v: target terminals, ground stations
- 5: connecting part
- 10: housing
- 11a-c: drones
- 21a, 21b: optical axes
- 22: telescope
- 23: beam corrector
- 24: steering system
- 25: coupling portion
- 26: fiber coupling unit
- 51: optical fiber
- 52: entangled photon source
- 53a, 53b: entangled photons
- 54: fiber coupling system for entangled photon source
- 55a, 55b: optical fibers
- 231: first beam corrector
- 232: second beam corrector
- 241: coarse steering system
- 242: fine steering system
- 251: position sensitive detector
- 252: controller
- 253: deflector
- 254: dichroic beam splitter
- 255: focussing lens
- 271: polarizing beam splitter
- 272: reflecting mirror
- L1, L2: lenses of the telescope
- R: Risley Prism
- R1, R2: prisms of the Risley Prism
- P: Position on the position sensitive detector

## Claims

**1.** Optical terminal (1) for quantum communication, comprising a first terminal unit (2a) configured to receive and/or transmit a first signal beam (3a) from or to a first target terminal (4a) and having a first optical axis (21a),
a second terminal unit (2b) configured to receive and/or transmit a second signal beam (3b) from and/or to a second target terminal (4b) and having a second optical axis (21b), and
a connecting part (5) configured to communicate with the first terminal unit (2a) and the second terminal unit (2b),
wherein each of the first and second terminal units (2a, 2b) comprises:
a telescope (22) provided on the respective first and second optical axis (21a, 21b) to collimate the respective first and second signal beams (3a, 3b),
a beam corrector (23) placed on the respective first and second optical axis (21a, 21b) and configured to correct the respective first and second optical signals beam (3a, 3b) over a predetermined field of view of the telescope (22),
a steering system (24) configured to adjust a propagation direction of the first and second signal beams (3a, 3b) to the respective first and second optical axis (21a, 21b), and
a coupling portion (25) for coupling the respective first and second signal beams (3a, 3b) to the connecting part (5).

**2.** Optical terminal (1) according to claim 1, wherein the coupling portion (25) comprises a fiber coupling unit (26) configured to couple the respective first and second signal beams (3a, 3b) into an optical fiber (51) of the connecting part (5).

**3.** Optical terminal (1) according to claim 2, wherein the optical fiber (51) is an optical relay fiber (51) connected to the coupling portions (25) of the first terminal unit (2a) and the second terminal unit (2b) and configured to optically connect the first terminal unit (2a) and the second terminal unit (2b) to each other.

**4.** Optical terminal (1) according to claim 2 or 3, wherein the first optical signal (3a) and/or the second optical signal (3b) comprises a QKD signal of a first wavelength and a beacon signal of a second wavelength different from the first wavelength.

**5.** Optical terminal (1) according to any of claims 2 to 4, wherein the optical fiber (51, 55a, 55b)) is a single mode-fiber.

**6.** Optical terminal (1) according to claim 1, wherein the connecting part (5) comprises an entangled photon source (52) configured to emit a pair of entangled photons (53a, 53b), wherein the entangled photon source (52) is arranged to couple a first photon (53a) of the pair of entangled photons (53a, 53b)to the coupling portion (25) of the first terminal unit (2a) and a second photon (53b) of the pair of entangled photons (53a, 53b) to the coupling portion (25) of the second terminal unit (2b).

**7.** Optical terminal (1) according to any of the preceding claims, wherein the beam corrector (23) comprises a liquid crystal modulator, a deformable mirror or a set of interchangeable phase plates.

**8.** Optical terminal (1) according to any of the preceding claims, wherein the beam corrector (23) is configured as a stacked amplitude-phase corrector plate.

**9.** Optical terminal (1) according to any of the preceding claims, wherein the beam corrector (23) is placed downstream the telescope (22) with respect to an incoming first or second signal beam (3a, 3b) from the first or second target terminal (4a, 4b).

**9.** Optical terminal (1) according to any of the preceding claims, wherein the beam corrector (23) is placed inside the telescope (22).

**10.** Optical terminal (1) according to any of the preceding claims,
wherein the steering system (24) comprises a coarse steering system (241) and a fine steering system (242), wherein the fine steering system (242) is configured as a Risley Prism (R).

**12.** Optical terminal (1) according to any of the preceding claims,
wherein the coupling portion (25) comprises a position sensitive detector (251) arranged and configured to detect a deviation of a propagation axis of the respective first and second optical signals (3a, 3b) from the respective first and second optical axis (21a, 21b), wherein the coupling system (25) further comprises a controller (252) configured to control a deflector (253) according to a sensed position (P) on the position sensitive detector (251), wherein the position sensitive detector (251) in particular is configured as a camera.

**13.** Optical terminal (1) according to claim 12, wherein the telescope (22) only comprises spherical optical elements.

**14.** Optical terminal (1) according to any of the preceding claims, wherein the connecting part (5) comprises a free space optical steering device (56) configured to guide the first signal beam (3a) onto the second optical axis (21b) and/or the second signal beam (3b) onto the first optical axis (21a).

**15.** Method for quantum communication, comprising
directing (S1) a first optical terminal unit (2a) of an optical terminal (1) towards an optical target terminal (4a), wherein the first optical terminal unit (2a) has an optical axis (21a);
receiving (S2) a signal beam (3a) from or to the optical target terminal (4a) through a telescope (22) of the first optical terminal unit (2a);
correcting (S3) the received signal beam (3a) by a beam corrector (23), wherein the beam corrector (23) is configured to correct the signal beam (3a) over a predetermined field of view of the telescope,
coupling (S4) the corrected signal beam (3a) into a connecting part (5) configured to communicate with a second terminal unit (2b) of the optical terminal (1).
